# EUROPEAN PATENT APPLICATION

(11) **EP 0 612 054 A1**
(43) Date of publication of application: **24.08.1994**
(21) Application number: 93310550.4
(22) Date of filing: 24.12.1993
(51) Int. Cl.: G09G 5/06, H04N 1/46

(54) **Invisible marking of electronic images**

(30) Priority: 17.02.1993 GB 9303198
(71) Applicant: INTERNATIONAL COMPUTERS LIMITED, Putney, London, SW15 1SW (GB)
(72) Inventor: Sheppard, Keith Reginald, Wokingham, Berkshire RG11 1LH (GB)
(74) Representative: Guyatt, Derek Charles

(57) **Abstract**

A method for making invisible identification markings on electronic images, e.g. for proving ownership, involves inserting identical colour values into at least two entries in a colour palette. An area of the image is modified to include a pattern composed of two or more pixel values which index entries in the colour palette containing identical colour values. Thus, the area is displayed on the screen as an area of single colour, and the pattern is invisible. However, the pattern can be detected electronically, or can be made visible by modifying the pallette entries..

## Description

### Background to the Invention

This invention relates to storage and display of electronic images, such as for example graphical, pictorial or photographic images held in electronic form for display on (eg) a computer screen.

An object of the invention is to provide a method of making invisible identification markings on such images. These markings could be used for any purpose, such as for example to identify versions of images. It is envisaged that one important usage could be to prove ownership of an image should any dispute arise over copyright or other rights in that image.

### Summary of the Invention

According to the invention there is provided an image display system comprising:
a) a display memory for storing an image as an array of pixel values;
b) a colour palette for holding a table of colour values; and
c) means for reading a pixel value from the display memory and using it to index the colour palette, to read out a colour value for display on a screen;
d) characterised in that at least two of the entries in the colour palette contain identical colour values; and
e) the image stored in the display memory contains at least one area containing a pattern composed of pixel values which index said entries containing identical colour values, whereby the area is displayed on the screen as an area of single colour.

It can be seen that the invention provides a way of storing markings in the image itself rather than as ancillary information in the file containing that image. As a result, the markings will be propagated not only when the file is copied but also if the information is converted to other file formats, or if the image is "captured" by a computer program which attempts to copy images by reading the image details directly from the computer's display hardware or display memory whilst the image is being displayed.

The markings are invisible in the sense that they cannot be detected when the image is displayed in the normal manner on (eg) a computer screen. However, a computer program cognisant of the method for encoding these markings can display the markings when required.

### Brief Description of the Drawing

The drawing is a block diagram of a computer system including a display system.

### Description of an Embodiment of the Invention

One display system in accordance with the invention will now be described by way of example with reference to the accompanying drawings.

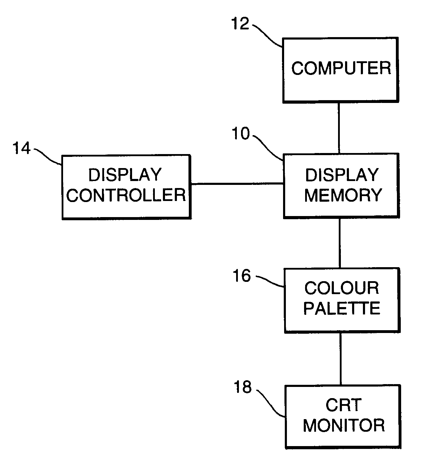

Referring to Figure 1, the system comprises a display memory 10 which stores an image as a rectangular array of pixel values, each value corresponding to the colour of a particular point of the image. For example, a typical full screen image on a personal computer could consist of a 800 by 600 array of pixels. The image data is written into the display memory from a computer 12.

The display memory 10 is addressed by a display controller 14, so as to read out a sequence of pixel values. These pixel values address a colour palette 16 which contains a table of available colour values. The output colour value from the colour palette represents the intensities of the red, green and blue components of the pixel to be displayed. The colour value is applied to a CRT monitor 18, to display a pixel on the CRT screen.

Thus, the pixel values do not themselves contain sufficient data to define every possible colour the system is capable of displaying. Instead, the pixel values are indexes into the colour palette which holds a table of available colour values.

Typically, the mechanism for creating the image selects a colour palette containing a repertoire of colours appropriate to that image. For example, the palette used for a portrait might contain a larger than average number of flesh tones, all of quite similar hue, whereas a meadow or forest landscape might have a much higher number of shades of green.

The number of entries in the colour palette thus defines the maximum number of different colours which can be included simultaneously in a single image. Generally speaking, the larger the number of colour palette entries, the more realistic and lifelike will be the photographic images displayed using that palette.

The number of colours available is often less critical for graphical images. Indeed, many graphical images will not utilise the full repertoire of colours. Even with photographic images, a small reduction in the number of available colours will make barely perceptible changes to the perceived quality of the image.

In this example, the image is preprocessed to reduce the number of colours used in the image by one by, for example, examining the colour palette and finding the two most similar colours in it. One of these palette entries is then set to a value which will typically be the average of the two similar colours. All references in the pixel array to either of the two similar colours is then set to refer to this new average entry. The other colour palette entry, no longer referred to from the pixel array, becomes a free entry.

The above technique is only one possible method for generating free palette entries. The precise method used is not fundamental to the present invention. All that is necessary is that one or more free palette entries are made available.

The simplest implementation of the marking technique is possible where there is an area of the image which is sufficiently large to hold the desired marks and which is of uniform colour. For clarity, this situation is assumed in the example below, although it will be shown later how the technique can still be used when no such area exists.

Suppose, by way of example, that the image contains a rectangular area, 5 pixels wide and 5 pixels high, and that all the pixels in that area are to be coloured a shade of red defined by entry number 0 in the colour palette.

| Pixel Values | Colour Palette |
|---|---|
| 0 0 0 0 0 | 0 Red |
| 0 0 0 0 0 | |
| 0 0 0 0 0 | |
| 0 0 0 0 0 | |
| 0 0 0 0 0 | |

Now suppose that it is desired to place the invisible mark of a diagonal cross in this area. To do this, a free palette entry is required. If none is available, then one is created using a technique such as is described above. Suppose that entry number 1 is free (ie not referred to from anywhere within the pixel array). To make a mark, palette entry 0 is copied into palette entry 1. As a result, palette entries 0 and 1 now define identical colours. The pixel array values are then altered so that those pixels occupied by the required mark refer to the new copy of the palette value as follows:

| Pixel Values | Colour Palette |
|---|---|
| 1 0 0 0 1 | 0 Red |
| 0 1 0 1 0 | 1 Red |
| 0 0 1 0 0 | |
| 0 1 0 1 0 | |
| 1 0 0 0 1 | |

It can be seen that the mark is clearly part of the image. However, because colour palette entries 0 and 1 are identical, there will be no difference in the displayed image between those picture elements covered by the mark and those which are not. Thus the mark is not visible when the image is displayed normally.

To view the invisible markings all that is required is an examination of the pixel values directly (either manually or by means of a computer program). Alternatively, a computer program which is cognisant of the encoding technique, and the palette entries used for the mark, could display the mark by changing the palette entries corresponding to the mark into a contrasting colour before or whilst the image is displayed.

The above example describes a situation where both the mark and the background upon which it is drawn are monochromatic. This is desirable because it only requires one free palette entry and therefore minimises any degradation of the quality of the displayed image. However, the same technique can be used to place multicoloured marks or to place the marks in multicoloured areas. The only additional requirement is that a greater number of free palette entries would be needed.

For example, suppose that the image area upon which it is wished to place the mark is in a chequered pattern of red and blue as follows:

| Pixel Values | Colour Palette |
|---|---|
| 0 1 0 1 0 | 0 Red |
| 1 0 1 0 1 | 1 Blue |
| 0 1 0 1 0 | |
| 1 0 1 0 1 | |
| 0 1 0 1 0 | |

Now suppose it is wished to place a mark consisting of a small square (2x2) within a larger square (3x3). This could be achieved using 4 free palette entries (for the sake of example, entries 2-5 inclusive) as follows:

| Pixel Values | Colour Palette |
|---|---|
| 2 3 2 3 0 | 0 Red |
| 3 4 5 2 1 | 1 Blue |
| 2 5 4 3 0 | 2 Red |
| 3 2 3 2 1 | 3 Blue |
| 0 1 0 1 0 | 4 Red |
| | 5 Blue |

Again, the mark is invisible when the image is displayed normally. The mark can be seen by examining the pixel values, but would most conveniently be shown by varying the palette whilst the image is displayed. For example, to make the mark show up as a white square within a black one, all the display program need do is set colour palette entries 2 and 3 to black and 4 and 5 to white.

Note, however, how increasing the number of colours used in both the mark and its background has increased the number of free colour palette entries required to make the mark. In fact, the number of free palette entries required can be anything up to the product of the number of colours used in the mark multiplied by the number of colours in the background image covered by that mark.

### An Alternative Form of the Invention

The technique described above can be used in any image format where a pixel array and colour palette are held as separate entities. In current personal computers, nearly all images of up to (typically) 256 colours are held in this format. However, some image formats supporting very large numbers of colours do not use colour palettes but instead hold full colour information for every pixel. An example of such a format is the 24-bit, or "true colour", format used in some high quality computer images.

In 24-bit format, for example, each entry in the pixel array contains a value consisting of three elements. These elements contain the intensity (as a numerical value between 0 and 255) of the red, green and blue components of the colour to be displayed. Thus, a mid range red would be represented by a pixel array value of 128, 0, 0. Black (no colour) would be represented by 0, 0, 0 and bright white (all colours in equal proportion) by 255, 255, 255 etc.

Although the technique described above could not be used to make totally invisible markings on such an image, a simple variation would allow markings which are almost invisible to be made.

Using the 24-bit format, for example, well over sixteen million colours can be represented. Clearly, some of these will be very similar indeed. In practice, the difference between one colour and another which is only one unit different in one or more of its three components is barely, if at all, perceptible. Consider the following area from a pixel array:
201,201,0 200,200,0 200,200,0 200,200,0 201,201,0
200,200,0 201,201,0 200,200,0 201,201,0 200,200,0
200,200,0 200,200,0 201,201,0 200,200,0 200,200,0
200,200,0 201,201,0 200,200,0 201,201,0 200,200,0
201,201,0 200,200,0 200,200,0 200,200,0 201,201,0
This represents a pale yellow diagonal cross on a very slightly darker yellow background. In practice, such a mark will be invisible except to the closest examination on top quality equipment. It could, however, be viewed with ease if a program was available which scanned the pixel array and altered all entries containing 201, 201, 0 to a contrasting colour (such as black, 0, 0, 0) before or whilst displaying the image.

## Claims

1. An image display system comprising:
a) a display memory for storing an image as an array of pixel values;
b) a colour palette for holding a table of colour values; and
c) means for reading a pixel value from the display memory and using it to index the colour palette, to read out a colour value for display on a screen;
d) characterised in that at least two of the entries in the colour palette contain identical colour values; and
e) the image stored in the display memory contains at least one area containing a pattern composed of pixel values which index said entries containing identical colour values, whereby the area is displayed on the screen as an area of single colour.

2. A method of displaying an image, comprising:
a) storing an image in a display memory as an array of pixel values;
b) storing a table of colour values in a colour palette; and
c) reading a pixel value from the display memory and using it to index the colour palette, to read out a colour value for display on a screen;
d) characterised in that at least two of the entries in the colour palette contain identical colour values; and
e) the image stored in the display memory contains at least one area containing a pattern composed of pixel values which index said entries containing identical colour values, whereby the area is displayed on the screen as an area of single colour.

3. A method according to claim 2 including the further step of modifying said identical colour values to contrasting colour values, so as to make said pattern visible on the screen.
